# EUROPÄISCHE PATENTSCHRIFT

(11) **EP 1 966 014 B1**
(45) Veröffentlichungstag und Bekanntmachung des Hinweises auf die Patenterteilung: **16.03.2016**
(21) Anmeldenummer: 06818482.9
(22) Anmeldetag: 10.11.2006
(51) Int. Cl.: B60S 5/00, B62D 21/09, B62D 29/00

(54) **VERFAHREN ZUR REPARATUR VON HOHLRAUMSTRUKTUREN MIT HOHLRAUMSCHOTTS**
METHOD OF REPAIRING BODY-CAVITY STRUCTURES WITH BODY-CAVITY PARTITIONS
PROCÉDÉ DE RÉPARATION DE STRUCTURES À ESPACES CREUX MUNIS DE CLOISONS ÉTANCHES D'ESPACE CREUX

(30) Priorität: 23.12.2005 DE 102005061904
(43) Veröffentlichungstag der Anmeldung: 10.09.2008
(73) Patentinhaber: Volkswagen Aktiengesellschaft, 38440 Wolfsburg (DE)
(72) Erfinder: STEGE, Michael, 38446 Wolfsburg (DE); HÄMEL, Rainer, 34590 Wabern-Uttershausen (DE)
(86) Internationale Anmeldenummer: PCT/EP2006/010823
(87) Internationale Veröffentlichungsnummer: WO 2007/079809

(56) Entgegenhaltungen:
- EP-A2- 1 391 368
- EP-A2- 1 577 195
- WO-A1-99/37506
- WO-A1-03/020574
- WO-A1-2006/059049
- WO-A2-02/062648
- DE-U1- 7 735 168
- DE-U1- 29 812 737
- DE-U1- 29 812 841
- US-A- 5 931 474

## Beschreibung

Die Erfindung betrifft ein Verfahren zur Reparatur von Hohlraumschotts gemäß dem Oberbegriff des unabhängigen Patentanspruchs.

Verfahren zur Reparatur von Hohlraumschotts in einer Hohlraumstruktur, insbesondere eines Fahrzeugs, sind bekannt. So müssen bei der Reparatur von Schwellern in Fahrzeugen Blechteile der Hohlraumstruktur entfernt werden, die freigelegten Hohlräume beispielsweise mit einem 2K-Schaum ausgeschäumt und anschließend die Ersatz-Blechteile wieder angebracht werden. Nachteilig dabei ist, dass das Ausschäumen der Hohlräume schwer durchführbar ist und sich relativ umständlich gestaltet. Hinzu kommt, dass die je nach Fahrzeugmodell erforderlichen Formteile zur Abdichtung von Hohlraumstrukturen häufig nicht vor Ort vorhanden sind. Oft liegt auch keine vollständige Dokumentation in Werkstattunterlagen vor, wodurch Verzögerungen entstehen können. Nach einem Crashfall kann somit keine durchgängige Reparatur von Abschottungsteilen durchgeführt werden.

Aus der DE 29812841 U1 ist bereits ein verstärktes Teil bekannt, welches ein flexibles Element mit einer Länge, die größer ist als seine Breite und ein hohles Teil mit einem Hohlraum umfasst. Das flexible Element ist in den Hohlraum des hohlen Teils eingesetzt, wobei wenigstens ein Teil des flexiblen Elements mit einem expandierten Harz bedeckt ist. Das expandierte Harz ist durch Expandieren eines expandierbaren Harzes erhalten. Bei dem expandierbaren Harz handelt es sich um eine ausgestanzte Platte, die um das flexible Element gewickelt ist oder um eine Beschichtung, die durch Formpressen auf das flexible Element aufgebracht ist. Weiterhin ist die WO 2006/059049 A1 und WO 03/020574 A1 bekannt.

Nächstliegender Stand der Technik ist die US 5 931 474, die ein Bauteil zur Abdichtung eines Hohlraums offenbart. Das Abdichtungselement kann auch für Reparaturzwecke eingesetzt werden und ist zweiteilig aus einem Kern und einer schäumbaren Hülle aufgebaut.

Der Erfindung liegt die Aufgabe zugrunde, ein verbessertes Verfahren zur Reparatur von Hohlraumschotts bereitzustellen.

Die erfindungsgemäße Lösung dieser Aufgabe besteht in den Merkmalen des unabhängigen Patentanspruchs, vorteilhafte Ausgestaltungen der Erfindung beschreiben die Unteransprüche.

Bei einem erfindungsgemäßen Verfahren zur Reparatur von Hohlraumschotts in einer Hohlraumstruktur eines Fahrzeugs wird wenigstens ein Teil der die Hohlraumstruktur bildenden Blechteile (12, 12') zu Reparaturzwecken entfernt, wobei eine Vorlage (14) für zumindest ein Zuschnittteil (13) für den Hohlraumschott (10) bereitgestellt wird, die Vorlage (14) auf ein plattenförmiges Element (15) übertragen und das Zuschnittteil (13) aus dem plattenförmigen Element (15) vereinzelt wird, um den Hohlraumschott als Zuschnittteil bereit zu stellen, wobei das Zuschnittteil (13) mittels einer Klebe- und Dichtmasse (16) mit der Hohlraumstruktur (11) verbunden wird. Weiterhin wird die Klebe- oder Dichtmasse in Schnurform bereitgestellt und/oder ist aus einem Butylkautschuk oder jedem anderen Material mit ähnlichen Klebe- und Dichteigenschaften gebildet. Abschließend wird das Zuschnittteil (13) mit einer ersten Kante (17) auf die Klebe- und Dichtmasse (16) gedrückt und danach wird das Blechteil (12) der Hohlraumstruktur (11) auf die Klebe- und Dichtmasse (16) aufgelegt.

Es wird eine Mustervorlage für wenigstens ein Hohlraumschott bereitgestellt. Die Mustervorlage ist bevorzugt in der Art eines Schnittmusterbogens ausgeführt und kann beispielsweise elektronisch übermittelt und vom Nutzer bzw. Reparaturbetrieb ausgedruckt werden. Auf der Vorlage kann eines oder können mehrere Zuschnittteile ausgebildet sein. Anschließend wird die Vorlage auf ein geeignetes plattenförmiges Element übertragen. Das plattenförmige Element ist bevorzugt aus einer geschäumten Universalplatte gebildet, die in ihren akustischen und mechanischen Eigenschaften einem Schaummaterial des serienmäßig eingebauten Schotts entspricht. Günstigerweise kann die Universalplatte als Original-Ersatzteil bereitgestellt werden. Es kann aber auch jede andere Platte aus geschäumten Material verwendet werden, die dem Benutzer zur Verfügung steht.

In einem weiteren Verfahrensschritt wird das Zuschnittteil aus dem plattenförmigen Element vereinzelt, beispielsweise mit einem Messer ausgeschnitten oder mit einem Stanzwerkzeug ausgestanzt. Denkbar wäre aber auch, dass das erforderliche Zuschnittteil als Fertigprodukt dem Benutzer zur Verfügung gestellt wird. Das so bereitgestellte Zuschnittteil wird anschließend mittels einer Klebe- und Dichtmasse mit der Hohlraumstruktur verbunden. Die Klebe- und Dichtmasse ist aus einer Butylkautschukmasse in Schnurform gebildet. Die Klebe- und Dichtmasse wird in einem weiteren Verfahrensschritt in die Hohlraumstruktur eingelegt. Im Falle des Ersatzes eines Hohlraumschotts für Reparaturzwecke können noch Reste des Original-Schaums vorhanden sein, auf die ein Streifen neuer Klebe- und Dichtmasse einfach aufgelegt wird. Für den Fall, dass das Hohlraumschott neu in einer Hohlraumstruktur angeordnet wird, wird die Klebe- und Dichtmasse an einer geeigneten Einbaustelle eingelegt. Das Zuschnittteil wird dann mit seiner ersten Kante auf die Klebe- und Dichtmasse gedrückt. Anschließend kann eine zweite freie Kante des Zuschnittteils mit der Klebe- und Dichtmasse belegt werden. Ein repariertes oder neues Blechteil der Hohlraumstruktur wird auf die Klebe- und Dichtmasse aufgelegt werden.

Insgesamt wird mit der erfindungsgemäßen Lösung ein einfaches Abschottungsreparaturkonzept zur Verfügung gestellt, das eine hochwertige Reparaturlösung, insbesondere in einer Werkstatt, bietet, die schnell und einfach umzusetzen ist. Besonders bevorzugt ist die erfindungsgemäße Lösung für alle Fahrzeugtypen anwendbar, so dass günstigerweise die Vielzahl an Varianten im Bereich des Vertriebs von Originalteilen reduziert werden kann.

Ein Hohlraumschott ist zur Abdichtung von Hohlraumstrukturen, eines Fahrzeugs vorgesehen, wobei der Hohlraumschott als Zuschnittteil ausgebildet ist. Vorteilhaft dabei ist, dass der Hohlraumschott einfach und schnell hergestellt werden kann, so dass ein Reparaturvorgang beschleunigt werden kann, weil nicht mehr auf Original-Ersatzteile gewartet werden muss. Der Hohlraumschott kann jedoch auch als Originalteil direkt dem Benutzer zur Verfügung gestellt werden.

Darüber hinaus wird eine Mustervorlage für einen Hohlraumschott zur Abdichtung von Hohlraumstrukturen, insbesondere eines Fahrzeugs, vorgeschlagen, wobei das Hohlraumschott als Zuschnittteil vereinzelbar ist. Insbesondere kann das Zuschnittteil aus einem Musterschnittbogen ausgeschnitten oder ausgestanzt werden.

Ferner wird ein Reparatursatz zur Reparatur von Hohlraumschotts zur Abdichtung von Hohlraumstrukturen, insbesondere eines Fahrzeugs, vorgeschlagen, bestehend aus wenigstens einem Element aus der Gruppe Mustervorlage, plattenförmiges Element, Vereinzelungswerkzeug und/oder Klebe- und Dichtmasse. Der Reparatursatz kann in seiner Gesamtheit zur Verfügung gestellt werden. Es können aber auch gesonderte Einzelteile bereitgestellt werden.

Bevorzugt ist die Mustervorlage aus einer Schnittvorlage und/oder Stanzvorlage gebildet, auf welcher ein oder mehrere Zuschnittteile aufgezeichnet sind. Das plattenförmige Element kann als Schaummatte ausgebildet sein, und die Klebe- oder Dichtmasse kann bevorzugt in Schnurform bereitgestellt werden und insbesondere aus einem Butylkautschuk gebildet sein. Es ist jedoch auch jedes andere Material mit ähnlichen Klebe- und Dichteigenschaften denkbar.

Ein Ausführungsbeispiel der Erfindung wird im folgenden anhand der Zeichnung erläutert.

Es zeigen schematisch:
- Fig. 1: eine perspektivische Ansicht einer zu Reparaturzwecken geöffneten Hohlraumstruktur im Halbschnitt;
- Fig. 2: eine bevorzugte Ausführungsform einer Mustervorlage;
- Fig. 3a,b,c: eine Darstellung einzelner bevorzugter Verfahrensschritte zur Herstellung eines Hohlraumschotts durch Übertragen einer Vorlage (Fig. 3a) auf ein plattenförmiges Element (Fig. 3b) und Vereinzeln eines Zuschnittteils aus dem plattenförmigen Element (Fig. 3c);
- Fig. 4a,b: eine Darstellung eines bevorzugte Verfahrensschritts zum Verbinden des Hohlraumschotts mit der Hohlraumstruktur (Fig. 4a) mittels einer Klebe- und Dichtmasse (Fig. 4b); und
- Fig. 5: eine Ansicht einer bevorzugten Anordnung des Ersatz-Hohlraumschotts in der Hohlraumstruktur.

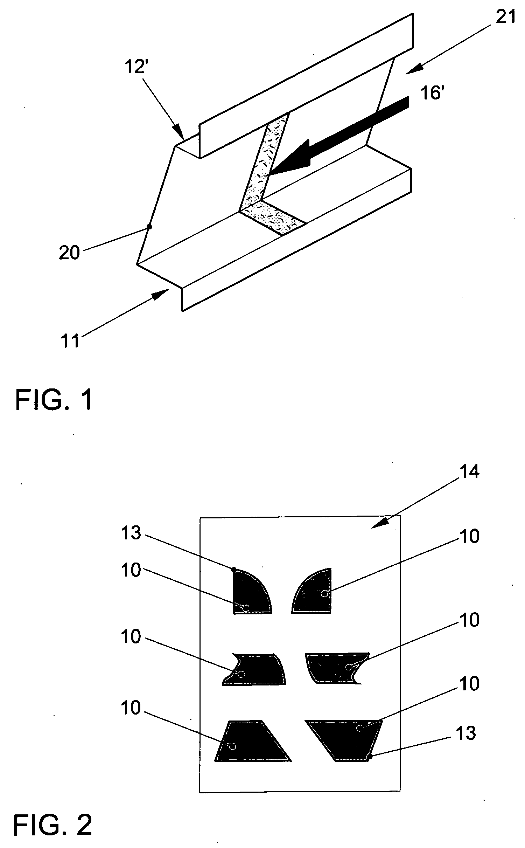

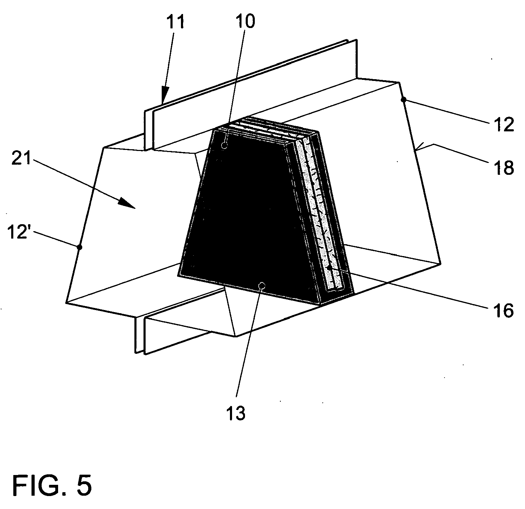

In den Fig. 1 bis 4 werden schematisch einzelne bevorzugte Verfahrensschritte zur Reparatur eines Hohlraumschotts 10 in einer Hohlraumstruktur 11, insbesondere eines Fahrzeugs, gezeigt. In Fig. 5 ist die endgültige Anordnung des Hohlraumschotts 10 in der Hohlraumstruktur 11 nach erfolgter Reparatur gezeigt. Gleiche Elemente werden dabei jeweils mit den gleichen Bezugszeichen versehen.

In Fig. 1 ist ein Istzustand der Hohlraumstruktur 11 vor einer Reparatur gezeigt, wobei ein in Fig. 1 nicht gezeigter Blechteil 12 der Hohlraumstruktur 11 entfernt worden ist. Das verbleibende Blechteil 12' weist eine U-förmige Ausbuchtung 20 nach außen auf und bildet im montierten Zustand mit dem nicht dargestellten Blechteil 12 einen Hohlraum 21 aus. Das nicht gezeigte Original-Hohlraumschott ist in der Fig. 1 entfernt. Erkennbar sind noch Reste einer ursprünglichen Klebe- und Dichtmasse 16', mit welcher das Original-Hohlraumschott in der Hohlraumstruktur 11 befestigt war.

Fig. 2 zeigt eine bevorzugte Ausführung einer Vorlage 14 für mehrere Hohlraumschotts 10 in verschiedenen geometrischen Formen, wobei die Formgebung an die Ausgestaltung der jeweiligen Hohlraumstruktur 11 angepasst ist. Die Vorlage 14 ist in der Art eines Schnittmusterbogens ausgebildet, und die einzelnen Hohlraumschotts 10 werden jeweils als Zuschnittteil 13 bereitgestellt.

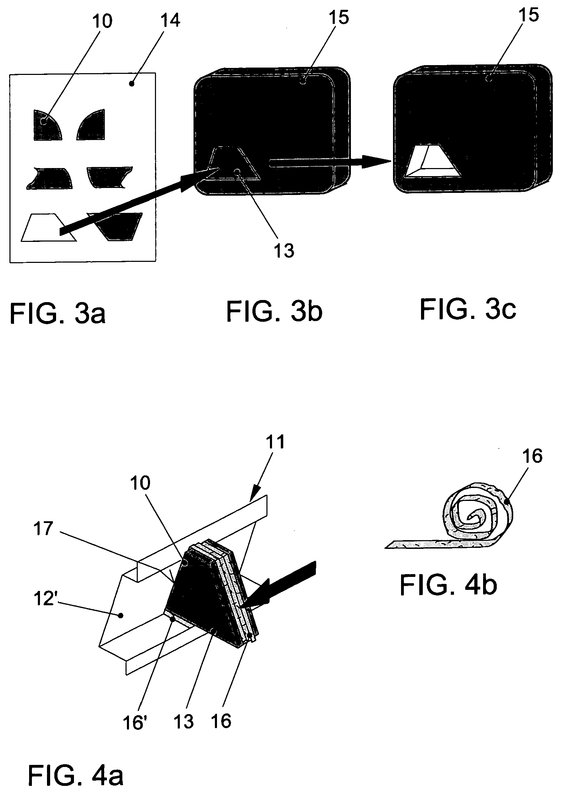

In den Fig. 3a bis 3c ist durch Pfeile der Ablauf einzelner Verfahrensschritte zur Herstellung des Hohlraumschotts 10 als Zuschnittteil 13 dargestellt. In Fig. 3a ist gezeigt, wie die als Zuschnittbogen ausgebildete Vorlage 14 auf ein plattenförmiges Element 15 in Fig. 3b übertragen wird. Das plattenförmige Element 15 ist als Schaummatte, insbesondere als geschäumte Universalplatte, ausgebildet. In Fig. 3c ist dargestellt, wie das Zuschnittteil 13 aus dem plattenförmigen Element 15 vereinzelt wird. Insbesondere wird das Zuschnittteil 13 aus dem plattenförmigen Element 15 geschnitten oder gestanzt.

Das Element 15 kann gezielt Aussparungen für Kabeldurchführungen oder kleine Löcher als Wachsablauflöcher aufweisen. Die Aussparungen können durch Freilassen einer Ecke oder durch einen gezielten Durchbruch oder Freischnitt in dem Schaummaterial realisiert sein. Im Reparaturfall sind diese Aussparungen optional mit auszuführen.

Fig. 4a zeigt, wie das so gefertigte Zuschnittteil 13 mittels einer aus Butylkautschuk bestehenden und in Schnurform bereitgestellten Klebe- und Dichtmasse 16 (sh. Fig. 4b) mit der Hohlraumstruktur 11 verbunden wird. Dabei wird die Klebe- und Dichtmasse 16 in die Hohlraumstruktur 11 eingelegt, vorzugsweise in einer Einbaustelle, die dem Original-Einbauzustand entspricht. Dabei sind die Reste der ursprünglichen Klebe- und Dichtmasse 16' (Fig. 1) eine Montagehilfe. Das Zuschnittteil 13 wird mit einer ersten Kante 17 auf die Klebe- und Dichtmasse 16 gedrückt. Anschließend wird eine zweite freie Kante 18 des Zuschnittteils 13 mit der Klebe- und Dichtmasse 16 belegt. Daraufhin wird das entfernte Blechteil 12 auf die Klebe- und Dichtmasse 16 aufgelegt.

Die in den Fig. 3 und 4 gezeigten Elemente können auch einzeln oder in der Gesamtheit als Reparatursatz zur Reparatur von Hohlraumschotts 10 bereitgestellt sein. Es kann auch noch ein nicht gezeigtes Vereinzelungswerkzeug bereitgestellt werden, beispielsweise ein Messer oder ein Stanzwerkzeug.

Fig. 5 zeigt eine Ansicht einer Anordnung des als Zuschnittteil 13 ausgebildeten Hohlraumschotts 10 in der Hohlraumstruktur 11 im reparierten Zustand. Durch die als Butylkautschuk gebildete Klebe- und Dichtmasse 16 wird das Hohlraumschott 10 gegen die Teile 12, 12' der Hohlraumstruktur 11 abgedichtet. Der so gebildete Hohlraum 21 kann beispielsweise der Hohlraum eines Schwellers eines Fahrzeugs sein.

### Bezugszeichenliste

- 10: Hohlraumschott
- 11: Hohlraumstruktur
- 12,12': Teil
- 13: Zuschnittteil
- 14: Mustervorlage
- 15: plattenförmiges Element
- 16: Klebe- oder Dichtmasse
- 17: erste Kante
- 18: zweite Kante
- 20: Ausbuchtung
- 21: Hohlraum

## Patentansprüche

1. Verfahren zur Reparatur eines Hohlraumschotts (10) in einer Hohlraumstruktur (11), eines Fahrzeugs, wobei wenigstens ein Teil (12) der die Hohlraumstruktur (11) bildenden Blechteile (12, 12') zu Reparaturzwecken von einem verbleibenden Blechteil (12') entfernt wird und wobei eine Vorlage (14) für zumindest ein Zuschnittteil (13) für den Hohlraumschott (10) bereitgestellt wird, die Vorlage (14) auf ein plattenförmiges Element (15) übertragen wird und das Zuschnittteil (13) aus dem plattenförmigen Element (15) vereinzelt wird, um den Hohlraumschott (10) als Zuschnittteil (13) bereit zu stellen, wobei das Zuschnittteil (13) mittels einer Klebe- und Dichtmasse (16) mit der Hohlraumstruktur (11) verbunden wird, **dadurch gekennzeichnet, dass** die Klebe- oder Dichtmasse
- in Schnurform bereitgestellt wird und/oder
- aus einem Butylkautschuk oder jedem anderen Material mit ähnlichen Klebe- und Dichteigenschaften gebildet ist,
wobei das Zuschnittteil (13) mit einer ersten Kante (17) auf die Klebe- und Dichtmasse (16) gedrückt wird und danach das Blechteil (12) der Hohlraumstruktur (11) auf die Klebe- und Dichtmasse (16) aufgelegt wird.

2. Verfahren nach Anspruch 2, **dadurch gekennzeichnet, dass** die Vorlage (14) in der Art eines Schnittmusterbogens ausgeführt ist.

3. Verfahren nach einem der Ansprüche 4 oder 5, **dadurch gekennzeichnet, dass** das Zuschnittteil (13) aus dem plattenförmigen Element (15) geschnitten oder gestanzt wird.

4. Verfahren nach einem der vorhergehenden Ansprüche, **dadurch gekennzeichnet, dass** die Klebe- und Dichtmasse (16) in die Hohlraumstruktur (11) eingelegt wird.

5. Verfahren nach einem der vorhergehenden Ansprüche" **dadurch gekennzeichnet, dass** eine zweite freie Kante (18) des Zuschnittteils (13) mit der Klebe- und Dichtmasse (16) belegt wird.

## Claims

1. Method for repairing a cavity partition (10) in a cavity structure (11) of a vehicle, wherein at least one part (12) of the sheet metal parts (12, 12') forming the cavity structure (11) is removed, for repair purposes, from a remaining sheet metal part (12'), and wherein a template (14) for at least one blank (13) for the cavity partition (10) is prepared, the template (14) is transferred to a plate-like element (15) and the blank (13) is separated from the plate-like element (15) in order to prepare the cavity partition (10) as a blank (13), wherein the blank (13) is bonded to the cavity structure (11) by means of an adhesive and sealing compound (16), **characterized in that** the adhesive or sealing compound
- is provided in the form of a band and/or
- consists of a butyl rubber or any other material with similar adhesive and sealing properties,
wherein a first edge (17) of the blank (13) is pressed onto the adhesive and sealing compound (16) and then the sheet metal part (12) of the cavity structure (11) is placed onto the adhesive and sealing compound (16).

2. Method according to Claim 2, **characterized in that** the template (14) is embodied in the manner of a cutting pattern chart.

3. Method according to either of Claims 4 and 5, **characterized in that** the blank (13) is cut or stamped out of the plate-like element (15).

4. Method according to one of the preceding claims, **characterized in that** the adhesive and sealing compound (16) is introduced into the cavity structure (11).

5. Method according to one of the preceding claims, **characterized in that** the adhesive and sealing compound (16) is applied to a second free edge (18) of the blank (13).

## Revendications

1. Procédé de réparation d'une cloison d'espace creux (10) dans une structure d'espace creux (11) d'un véhicule, au moins une partie (12) des parties en tôle (12, 12') formant la structure d'espace creux (11), pour des besoins de réparation, étant enlevée d'une partie en tôle restante (12') et un modèle (14) pour au moins une partie de pièce découpée (13) pour la cloison d'espace creux (10) étant fourni, le modèle (14) étant transmis à un élément en forme de plaque (15) et la partie de pièce découpée (13) étant séparée de l'élément en forme de plaque (15), afin de fournir la cloison d'espace creux (10) en tant que partie de pièce découpée (13), la partie de pièce découpée (13) étant connectée au moyen d'une masse adhésive et d'étanchéité (16) à la structure d'espace creux (11), **caractérisé en ce que** la masse adhésive ou d'étanchéité
- est fournie sous forme de cordon et/ou
- est formée à partir d'un caoutchouc butyle ou de tout autre matériau ayant des propriétés adhésives et d'étanchéité similaires,
la partie de pièce découpée (13) étant pressée avec un premier bord (17) sur la masse adhésive et d'étanchéité (16) et ensuite la partie en tôle (12) de la structure d'espace creux (11) étant posée sur la masse adhésive et d'étanchéité (16).

2. Procédé selon la revendication 2, **caractérisé en ce que** le modèle (14) est réalisé à la manière d'une feuille de modèle de coupe.

3. Procédé selon l'une quelconque des revendications 4 ou 5, **caractérisé en ce que** la partie de pièce découpée (13) est découpée ou estampée à partir de l'élément en forme de plaque (15).

4. Procédé selon l'une quelconque des revendications précédentes, **caractérisé en ce que** la masse adhésive et d'étanchéité (16) est introduite dans la structure d'espace creux (11).

5. Procédé selon l'une quelconque des revendications précédentes, **caractérisé en ce qu'**une deuxième arête libre (18) de la partie de pièce découpée (13) est pourvue de la masse adhésive et d'étanchéité (16).
